# EUROPEAN PATENT SPECIFICATION

(11) **EP 2 479 827 B1**
(45) Date of publication and mention of the grant of the patent: **02.01.2019**
(21) Application number: 12151863.3
(22) Date of filing: 20.01.2012
(51) Int. Cl.: C01B 3/38, H01M 8/0612, H01M 8/04746, H01M 8/0438, H02P 8/22, H01M 8/0432

(54) **Fuel cell system**
Brennstoffzellensystem
Système de pile à combustible

(30) Priority: 21.01.2011 JP 2011011052
(43) Date of publication of application: 25.07.2012
(73) Proprietor: Aisin Seiki Kabushiki Kaisha, Aichi-ken, 448-8650 (JP)
(72) Inventor: Yabutani, Motohiko, Kariya-shi, Aichi 448-8650 (JP); Nendai, Shinji, Kariya-shi, Aichi 448-8650 (JP)
(74) Representative: TBK

(56) References cited:
- JP-A- 2006 180 590
- US-A- 4 890 048
- US-B1- 6 280 867

## Description

### TECHNICAL FIELD

This disclosure generally relates to a fuel cell system.

### BACKGROUND DISCUSSION

A known fuel cell system such as disclosed in JP2008-243594A (hereinafter referred to as Reference 1) includes a fuel cell generating an electric power by being supplied with an anode fluid and a cathode fluid, an evaporating portion evaporating water so as to generate water vapor, and a reforming portion reforming a fuel by using the water vapor generated at the evaporating portion to thereby form an anode fluid. The fuel cell system further includes a tank storing the water supplied to the evaporating portion, a water supply passage connecting the tank and the evaporating portion so as to supply the water in the tank to the evaporating portion, and a pump provided at the water supply passage so as to transmit the water in the tank to the evaporating portion.

A volume of the water transmitted or supplied to the evaporating portion (i.e., a water supply volume) per time unit (1 minute) is small and thus is required to be controlled highly accurately. In a case where the water supply volume per time unit fluctuates, a flow volume of the water vapor generated from the water and a flow volume of anode gas (a hydrogen containing gas) reformed from the fuel by means of the water vapor are influenced. Further, a power generation performance of the fuel cell is influenced. Therefore, a stepping motor driven on a basis of the number of input pulses has been recently used as a drive source to drive the pump.

JP03-11998A (hereinafter referred to as Reference 2) and JP11-41987A (hereinafter referred to as Reference 3) each discloses a technique to control a driving of a stepping motor, though the technique is not related to the fuel cell system. Reference 2 discloses a stepping motor drive control method and unit. According to Reference 2, various operations such as a sheet transfer, a highly accurate reading, and printing are performed while achieving a variable speed in a wide speed range. In an office automation equipment, for example, in a fax machine, a sheet is transferred by plural steps in one unit (corresponding to one line) to thereby restrain an operation noise and a vibration at a time of the sheet transfer. Reference 3 discloses a stepping motor drive control method and apparatus using a variable step angle. According to Reference 3, without a usage of a micro-step control, the variable step angle and an operation pulse train are controlled so as to decrease the vibration and the operation noise in the same way as the micro-step control. Furthermore, document US 6 280 867 B1 discloses a system for delivering fluid to a fuel cell. The system includes a source of fluid, a fuel cell and a fluid delivery device in fluid communication therewith. The delivery device includes a pump having a reciprocating piston for drawing fluid from the source, pressurizing the fluid and delivering the fluid to the fuel cell.

Still further, document JP 2006 180590 A discloses a calculation of the optimum number of partitions of microstep drive based on a rotation speed of a stepping motor, a frequency calculated by a frequency measuring portion, and the like.

Still further, document US 4 890 048 A discloses a stepping motor controller circuit, wherein the frequency of the motor driver input signal controls the angular velocity of the stepping motor. To accelerate or decelerate the motor, the motor controller linearly increases or decreases the frequency of the motor driver input signal in proportion to a desired angular acceleration value conveyed in an input command.

As mentioned above, the stepping motor is effective as the drive source to drive the pump. However, because the stepping motor is driven on a basis of the step angle, the stepping motor is likely to generate a resonance that induces a harmful vibration. The stepping motor includes a resonance frequency (a natural frequency) based on a dynamic mass and a spring
constant. In a case where the resonance frequency exists in a range of rotations of the stepping motor, the resonance may occur at the stepping motor and therefore the harmful vibration may occur.

In a case where the harmful vibration occurs at the stepping motor during an operation of the fuel cell system, water supply characteristics of the pump driven by the stepping motor are influenced, which may deteriorate the accuracy of the water supply volume of the pump per time unit. In a case where the water supply volume per time unit fluctuates relative to a target water supply volume, the volume of the water vapor generated from the water fluctuates relative to a target flow volume of the water vapor. As a result, it may be difficult to stably maintain the power generation performance of the fuel cell for a long time period.

A need thus exists for a fuel cell system that restrains a harmful vibration caused by a resonance of a stepping motor and that effectively maintains a water supply volume of a water supply source such as a pump for a long time period.

### SUMMARY

According to aspect of this disclosure, a fuel cell system includes an evaporating portion evaporating water to generate a water vapor, a reforming portion forming an anode fluid by reforming a fuel by using the water vapor generated at the evaporating portion, a fuel cell generating an electric power by being supplied with the anode fluid and a cathode fluid, a tank storing the water supplied to the evaporating portion, a water supply passage connecting the tank and the evaporating portion and allowing the water in the tank to be supplied to the evaporating portion, a water supply source provided at the water supply passage to transmit the water in the tank to the evaporating portion, a stepping motor driving the water supply source, and a control portion driving the stepping motor to transmit the water in the tank to the evaporating portion. The fuel cell system includes a water sensor that is provided in the water supply passage at a position between the evaporating portion and the water supply source, and detects a surface of the water in the water supply passage. The control portion configured to perform a harmful vibration restraining process to change a resonance frequency of the stepping motor by changing the number of steps per rotation of the stepping motor based on a volume of the water transmitted to the evaporating portion per time unit, in order to restrain deterioration of the detection accuracy of the water surface by the water sensor.

According to the aforementioned disclosure, the control portion performs the harmful vibration restraining process for changing the number of partitions of the basic step angle of the stepping motor on a basis of the volume of the water transmitted to the evaporating portion per time unit. The resonance frequency of the stepping motor that is actually rotating is changeable. As a result, the resonance is avoidable from an operation range of the stepping motor that is actually rotating. Further, the harmful vibration caused by the resonance of the stepping motor is avoidable. Thus, even when revolutions of the stepping motor per time unit are changed, the resonance of the stepping motor is avoidable because the volume of the water transmitted to the evaporating portion per time unit is changeable. The harmful vibration caused by the resonance is restrained accordingly.

The control portion performs the harmful vibration restraining process to change the number of steps per rotation of the stepping motor by changing the number of partitions of a basic step angle of the stepping motor based on the volume of the water transmitted to the evaporating portion per time unit.

Accordingly, the resonance frequency of the stepping motor is changeable to thereby restrain the harmful vibration of the stepping motor. The change of the number of partitions of the basic step angle results in the change of the number of steps per rotation of the stepping motor.

The volume of the water transmitted to the evaporating portion per time unit falls within a range from 0.1 cc to 20 cc.

In a state where the number of partitions of the basic step angle of the stepping motor is defined to be n, the control portion alternately selects a first range where n is relatively smaller and a second range where n is relatively greater in association with an increase of the volume of the water transmitted to the evaporating portion per time unit.

Accordingly, the resonance frequency of the stepping motor is changeable to thereby restrain the harmful vibration caused by the resonance of the stepping motor.

In a state where the number of partitions of the basic step angle of the stepping motor is defined to be n, the control portion includes a storage portion storing information of the number of partitions of the basic step angle in which n is equal to or greater than two and a selection operating portion selecting the arbitrary number of partitions from the information of the number of partitions of the basic step angle stored in the storage portion depending on a place where the fuel cell system is installed,

Accordingly, a manufacturer, a seller, an installation person, a maintenance person, a user, and the like of the fuel cell system operate the selection operating portion so that the arbitrary number of partitions is selected from the information related to the number of partitions of the basic step angle stored in the storage portion based on the installation place of the fuel cell system.

In a case where the number of rotations of the stepping motor per time unit is greater than a predetermined threshold value, the control portion drives the stepping motor based on the number of steps of the stepping motor different from the number of steps of the stepping motor that occurs in a range where the number of rotations of the stepping motor is greater than the predetermined threshold value.

Accordingly, the harmful vibration caused by the resonance is restrained.

In a case where the number of rotations of the stepping motor per time unit is equal to or smaller than the predetermined threshold value, the control portion drives the stepping motor based on the number of steps of the stepping motor different from the number of steps of the stepping motor that occurs in a range where the number of rotations of the stepping motor is equal to or smaller than the predetermined threshold value.

Accordingly, the harmful vibration caused by the resonance is restrained.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram schematically illustrating a fuel cell system according to a first embodiment disclosed here;
Fig. 2 is a block diagram schematically illustrating a drive system of a stepping motor according to the first embodiment;
Fig. 3 is a diagram illustrating waveforms of an excitation current in phase A and phase B when the stepping motor is controlled in a 1/4 mode;
Fig. 4 is a diagram illustrating the waveforms of the excitation current in phase A and phase B when the stepping motor is controlled in a 1/16 mode;
Fig. 5 is a diagram illustrating a relationship between the number of rotations of the stepping motor and resonance points thereof;
Fig. 6 is a diagram illustrating a relationship among a water supply volume per time unit, pump revolutions, an actual noise level in the 1/4 mode, an actual noise level in the 1/16 mode, and an actual mode according to a second embodiment disclosed here;
Fig. 7 is a diagram illustrating a relationship among the water supply volume per time unit, the pump revolutions, the actual noise level in the 1/4 mode, the actual noise level in the 1/16 mode, and the actual mode according to a third embodiment disclosed here;
Fig. 8 is a block diagram schematically illustrating the drive system of the stepping motor according to a fifth embodiment;
Fig. 9 is a flow performed by a CPU of a control portion according to a sixth embodiment disclosed here;
Fig. 10A is a diagram illustrating the waveforms of the excitation current in phase A and phase B, and an angular displacement in a full-step drive;
Fig. 10B is a graph illustrating the waveforms of the excitation current in phase A and phase B, and the angular displacement in a micro-step drive (the 1/4 mode); and
Fig. 11 is a block diagram of the fuel cell system according to first to sixth embodiments.

### DETAILED DESCRIPTION

### [First embodiment]

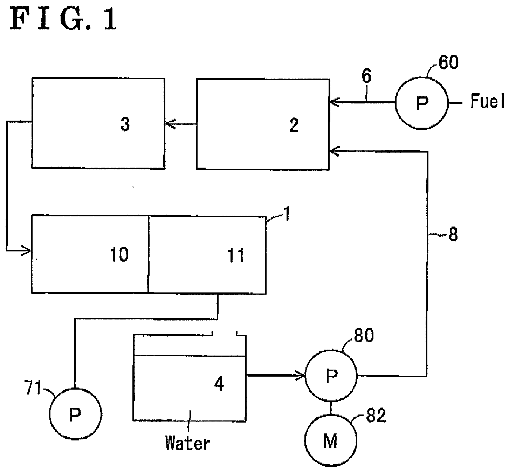

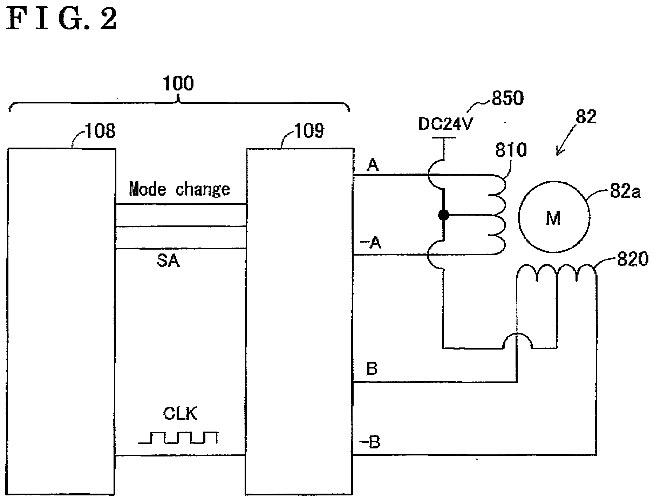

A first embodiment will be explained with reference to Figs. 1 and 2. A water vapor generating system that generates water vapor for reforming in a fuel cell system includes a reforming portion 3 reforming fuel by using the water vapor so as to form an anode gas, an evaporating portion 2 generating the water vapor from water in a liquid phase (substantially, pure water), and a tank 4 storing the water. The water vapor generating system also includes a water supply passage 8 connecting the tank 4 to the evaporating portion 2, a pump 80 provided at the water supply passage 8 to serve as a water supply source to thereby send the water in the tank 4 to the evaporating portion 2, and a stepping motor 82 in a two-phase excitation mode functioning as a drive source to drive the pump 80.

In Fig. 1, in a case where a fuel pump 60 provided at a fuel passage 6 is driven, the fuel is supplied to the reforming portion 3 via the evaporating portion 2. At this time, the fuel may be directly supplied to the reforming portion 3. An anode gas (an anode fluid) generated at the reforming portion 3 is supplied to an anode 10 of a fuel cell 1. A cathode gas is supplied to a cathode 11 of the fuel cell 1 by a cathode pump 71 serving as a cathode gas supply source. A power generation is thus performed at the fuel cell 1. An exhaust gas generated upon a power generation reaction is discharged to the outside of the fuel cell system after an exhaust heat and a condensation water are collected from the exhaust gas via a heat exchanger. A volume of the water supplied or transmitted (i.e., a water supply volume) from the pump 80 to the evaporating portion 2 per time unit (one minute) ranges from 0.1 cc to 20 cc, specifically, from 0.5 cc to 10 cc though it depends on a type of the fuel cell system.

Fig. 2 illustrates a drive system of the stepping motor 82. The drive system includes a microcomputer 108 and a stepping motor control circuit (IC) 109 to which a command is input from the microcomputer 108. The stepping motor 82 is controlled by the stepping motor control circuit 109. The microcomputer 108 and the stepping motor control circuit 109, constituting a portion of a control portion 100, performs a micro-step control to thereby divide a basic step angle of the stepping motor 82 and increase the number of steps per rotation of the stepping motor 82.

The stepping motor 82 includes a rotor portion 82a rotating the pump 80, a first excitation winding portion 810 to which a plus phase A and a minus phase A are supplied so as to rotate the rotor portion 82a at an axis thereof, and a second excitation winding portion 820 to which a plus phase B and a minus phase B are supplied so as to rotate the rotor portion 82a at the axis thereof. The first excitation winding portion 810 and the second excitation winding portion 820 of the stepping motor 82 are connected to a power source 850 and to respective ports of the stepping motor control circuit 109. The microcomputer 108 outputs a drive command signal CLK to the stepping motor control circuit 109. The microcomputer 108 also outputs a mode change signal SA to the stepping motor control circuit 109 so as to change a control mode of the stepping motor 82. The control mode of the stepping motor 82 corresponds to a step angle of the stepping motor 82 that is specified to be 1/n of the basic step angle (full step angle). Specifically, the control mode of the stepping motor 82 includes a 1/4 mode where the step angle of the stepping motor 82 is 1/4 of the basic step angle and a 1/16 mode where the step angle of the stepping motor 82 is 1/16 of the basic step angle. In the stepping motor 82, the basic step angle (full step angle) is basically determined on a basis of the number of phases and the number of gears of a rotor of the stepping motor 82. In addition, in the micro-step control, an electric current supplied to the first and second excitation winding portions 810 and 820 is not simply controlled by turning-on or turning-off. Specifically, a current ratio of the first and second excitation winding portions 810 and 820 is finely changed. The rotor is therefore rotatable at the step angle that is obtained by further finely dividing the basic step angle (full step angle). According to the micro-step control, the number of steps per rotation of the stepping motor 82 is changeable. As a result, a resonance frequency of the stepping motor 82 is changeable and variable. The resonance frequency is thus avoidable from an operation range (i.e., a rotation range) of the stepping motor 82 to thereby inhibit a resonance thereof.

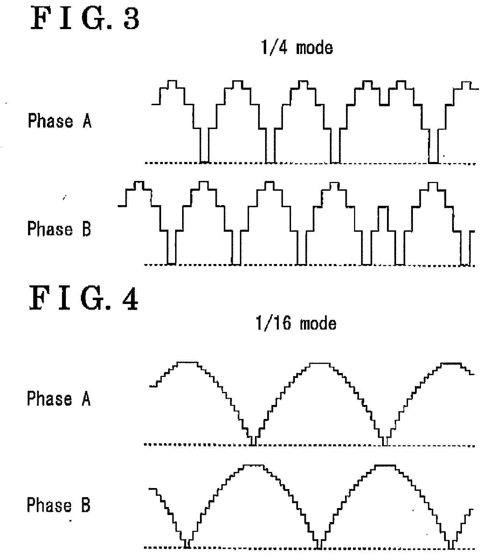

Fig. 3 illustrates waveforms of the phase A current (excitation current) and the phase B current (excitation current) in the 1/4 mode of the stepping motor 82. Fig. 4 illustrates waveforms of the phase A current (excitation current) and the phase B current (excitation current) In the 1/16 mode of the stepping motor 82. The step angle in the 1/16 mode is smaller than the step angle in the 1/4 mode. Therefore, the number of steps in the 1/16 mode when the stepping motor 82 rotates one time is greater than the number of steps in the 1/4 mode. The increased number of steps assists an easy change of the resonance frequency.

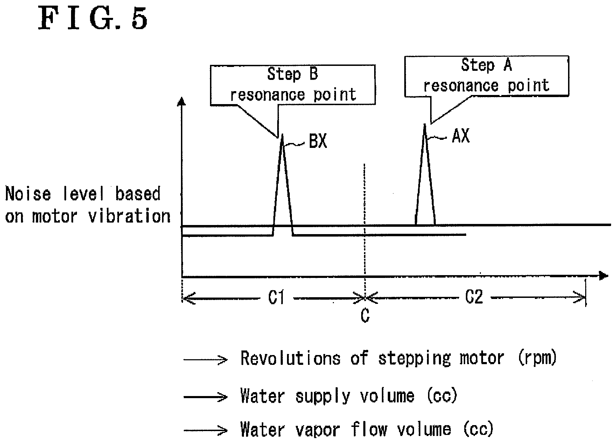

Fig. 5 indicates a concept of the first embodiment. A horizontal axis in Fig. 5 indicates, as a physical amount, the number of rotations (revolutions) of the stepping motor 82 per time unit (rpm), i.e., the number of rotations (revolutions) of the pump 80 serving as the water supply source, and eventually a water supply volume (cc) per time unit. The water supply volume per time unit basically corresponds to a flow volume of the water vapor per time unit generated at the evaporating portion 2, and further to a flow volume of the anode gas per time unit. That is, the water supply volume per time unit corresponds, as the physical amount, to a power generation output of the fuel cell system

A vertical axis in Fig. 5 indicates a magnitude of a vibration of the stepping motor 82, i.e., a noise level based on the vibration. A threshold value for the physical amount in the horizontal axis (i.e., a threshold value for the revolutions of the stepping motor 82 per time unit) is specified by a threshold value C. As schematically illustrated in Fig. 5, in a range C1 where the revolutions of the stepping motor 82 per time unit are equal to or smaller than the threshold value C, a resonance BX occurs when the number of steps per rotation of the stepping motor 82 is equal to a step B. On the other hand, in a range C2 where the revolutions of the stepping motor 82 per time unit are greater than the threshold value C, a resonance AX occurs when the number of steps per rotation of the stepping motor 82 is equal to a step A. Thus, according to the present embodiment, the step A (one of the 1/4 mode and the 1/16 mode) is selected in the range C1 instead of the step B that causes the resonance BX of the stepping motor 82. Then, the stepping motor 82 is driven in the selected mode so as to drive the pump 80 and supply the water to the evaporating portion 2. On the other hand, the step B (the other of the 1/4 mode and the 1/16 mode) is selected in the range C2 instead of the step A that causes the resonance AX of the stepping motor 82. The stepping motor 82 is driven in the selected mode so as to drive the pump 80 and supply the water to the evaporating portion 2. Accordingly, a harmful vibration caused by the resonance may be restrained.

### [Second embodiment]

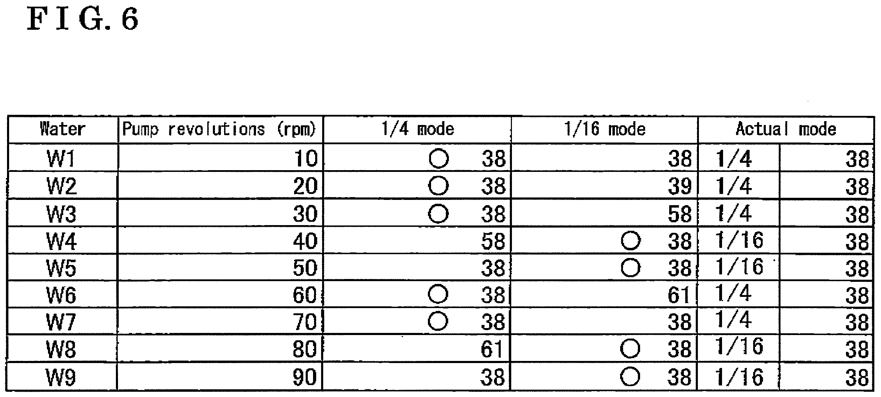

A second embodiment basically includes the same configuration and effect as those of the first embodiment. Fig. 6 illustrates an example of a relationship among the water supply volume of the pump 80 per time unit, the revolutions of the pump 80 per time unit, an actual noise level (dB) in the 1/4 mode of the stepping motor 82, and an actual noise level in the 1/16 mode of the stepping motor 82. Generally, the operation range of the stepping motor 82 is from 10 rpm to 100 rpm and excluding 100 rpm. The actual noise level is obtained by measuring the noise by a noise level meter at a point one meter away from the pump 80. In Fig. 6, the "actual mode" indicates the control mode of the stepping motor 82 that is actually selected in the actual operation of the fuel cell system, and the actual noise level (dB) at that time.

As illustrated in Fig. 6, in a case where the water supply volume of the pump 80 per time unit sequentially increases to W1, W2, W3, W4, W5, W6, W7, W8 and W9, the revolutions of the pump 80 per time unit gradually increase to 10 rpm, 20 rpm, 30 rpm, 40 rpm, 50 rpm, 60 rpm, 70 rpm, 80 rpm, and 90 rpm. At this time, as understood from Fig. 6, the control mode of the stepping motor 82 is determined to be the 1/4 mode that is obtained by dividing the basic step angle into four in a case where the revolutions of the pump 80 are 10 rpm, 20 rpm, or 30 rpm and the water supply volume is W1, W2, or W3. At this time, the resonance is inhibited and the noise level is limited to be 38dB. On the other hand, in a case where the revolutions of the pump 80 increase to 40 rpm or 50 rpm and the water supply volume increase to W4 or W5, the control mode of the stepping motor 82 is changed to the 1/16 mode that is obtained by dividing the basic step angle into sixteen. At this time, the resonance is inhibited and the noise level is limited to be 38dB. Further, the revolutions of the pump 80 increase to 60 rpm or 70 rpm and the water supply volume increases to W6 or W7, the control mode is again changed to the 1/4 mode from the 1/16 mode. At this time, the resonance is inhibited and the noise level is limited to be 38dB. Furthermore, in a case where the revolutions of the pump 80 increase to 80 rpm or 90 rpm and the water supply volume increases W8 or W9, the control mode of the stepping motor 92 is again changed to the 1/16 mode from the 1/4 mode. At this time, the resonance is inhibited and the noise level is limited to 38dB.

According to the present embodiment, based on the magnitude of the water supply volume, i.e., the revolutions of the pump 80, the control mode of the stepping motor 82 is changed so as to control the step angle of the stepping motor 82. Specifically, the number of steps per rotation of the stepping motor 82 is controllable. As a result, the resonance frequency of the stepping motor 82 is changeable. The resonance frequency is avoidable from the operation range of the stepping motor 82, thereby restraining the resonance and the resulting harmful vibration of the stepping motor 82. While the influence caused by the harmful vibration of the stepping motor 82 is being avoided, the water supply accuracy of the pump 80 is highly accurately controlled. Even when the water supply volume per time unit is extremely small, the flow volume of the water is highly accurately controllable. Thus, the volume of the water vapor generated at the evaporating portion 2 is highly accurately controlled. In this case, lack of water such as coking, and excess water such as a reduction in a reforming catalyst activity at the reforming portion 3 may be eliminated. Specifically, the coking occurs when carbon resulting from the fuel supplied to the reforming portion 3 is deposited on a surface of the reforming catalyst of the reforming portion 3, thereby decreasing a durability of the reforming catalyst.

As understood from Fig. 6, in a case where the revolutions of the pump 80 fall within a range from 10 rpm to 40 rpm and excluding 40 rpm, the control mode of the stepping motor 82 is determined to be in the 1/4 mode. In a case where the revolutions of the pump 80 fall within a range from 40 rpm to 60 rpm and excluding 60 rpm, the control mode of the stepping motor 82 is determined to be in the 1/16 mode. In a case where the revolutions of the pump 80 fall within a range from 60 rpm to 80 rpm and excluding 80 rpm, the control mode of the stepping motor 82 is determined to be in the 1/4 mode. In a case where the revolutions of the pump 80 fall within a range from 80 rpm to 90 rpm and excluding 90 rpm, the control mode of the stepping motor 82 is determined to be in the 1/16 mode.

### [Third embodiment]

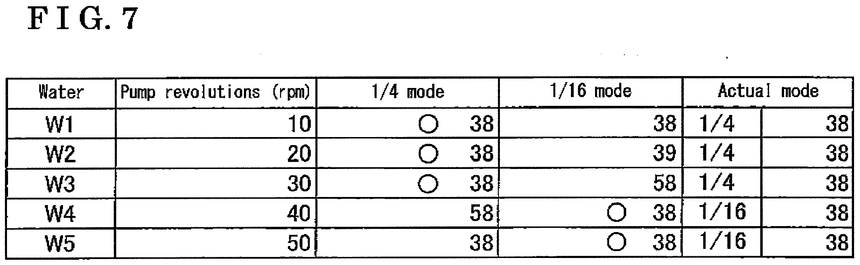

A third embodiment will be explained with reference to Fig. 7. The third embodiment basically includes the same configuration and effect as those of the first embodiment. A difference of the third embodiment from the first embodiment will be mainly explained. According to the third embodiment, the operation range of the stepping motor 82 is from 10 rpm to 60 rpm and excluding 60 rpm. As understood from Fig. 7, in a case where the water supply volume is W1, W2, or W3 and the revolutions of the pump 80 are 10 rpm, 20 rpm, or 30 rpm, the control mode of the stepping motor 82 is specified to be in the 1/4 mode. In this case, the resonance is inhibited and the noise level is limited to 38dB.

On the other hand, in a case where the water supply volume increases to W4 or W5, the revolutions of the pump 80 increase to 40 rpm or 50 rpm. In this case, the control mode of the stepping motor 82 is changed to the 1/16 mode from the 1/4 mode. At this time, the noise level is limited to 38dB.

According to the third embodiment, in a case where the water supply volume fluctuates, i.e., the revolutions of the pump 80 fluctuate, the control mode of the stepping motor 82 is changed so as to adjust the step angle of the stepping motor 82 on a basis of the water supply volume, i.e., the revolutions of the pump 80. As a result, the resonance frequency of the stepping motor 82 is avoidable so that the resonance of the stepping motor 82 is restrained, which inhibits the harmful vibration of the stepping motor 82.

According to the third embodiment, while the influence of the harmful vibration resulting from the resonance of the stepping motor 82 is being inhibited, the pump 80 is highly accurately controlled. Therefore, the water flow volume is highly accurately controllable even when the water flow volume is extremely small. The volume of the water vapor generated at the evaporating portion 2 is highly accurately controlled. In this case, the lack of water such as the coking and the excess water such as the reduction In the reforming catalyst activity at the reforming portion 3 are inhibited.

### [Fourth embodiment]

A fourth embodiment basically includes the same configuration and effect as those of the second embodiment. A difference of the fourth embodiment from the second embodiment will be mainly explained. According to the fourth embodiment, the operation range of the stepping motor 82 Is from 10 rpm to 60 rpm and excluding 60 rpm. In a case where the water supply volume is W1, W2, or W3 while the revolutions of the pump 80 are 10 rpm, 20 rpm, or 30 rpm, the control mode of the stepping motor 82 is specified to be in a 1/8 mode. On the other hand, in a case where the water supply volume increases to W4 or W5, the revolutions of the pump 80 increase to 40 rpm or 50 rpm. In this case, the control mode of the stepping motor 82 is changed to the 1/16 mode from the 1/8 mode.

### [Fifth embodiment]

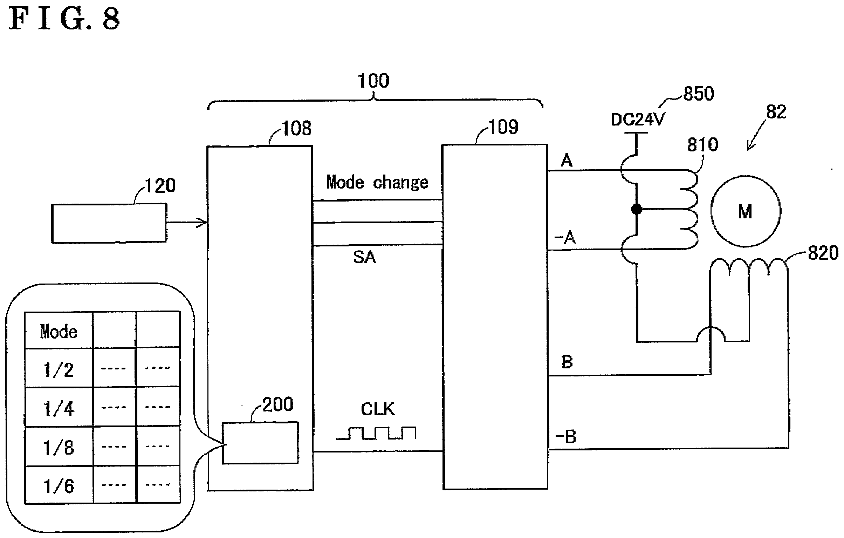

A fifth embodiment will be explained with reference to Fig. 8. The fifth embodiment basically Includes the same configuration and effect as those of the first embodiment. A difference of the fifth embodiment from the first embodiment will be mainly explained. Before shipment of the fuel cell system, the control mode of the stepping motor 82 such as the 1/4 mode and the 1/16 mode selected on a basis of the revolutions of the stepping motor 82 is specified beforehand in a software program. The control portion 100 performs a harmful vibration inhibition process to change the number of partitions of the basic step angle of the stepping motor 82 depending on the water supply volume per time unit (i.e., the revolutions of the pump 80 per time unit) sent to the evaporating portion 2 from the tank 4. As a result, the number of steps per rotation of the stepping motor 82 is changed so as to avoid the resonance frequency from the operation range of the stepping motor 82, which results in restraining of the harmful vibration of the stepping motor 82.

The fuel cell system may be installed at various types of places such as on a hard ground or a soft ground. Specifically, the fuel cell system may be installed at a concrete wall, an asphalt wall, a soil area, a sandy area, or a wooden surface, for example. In addition, the fuel cell system may be installed in a state where a neighboring structure is a concrete wall, a cement wall, a wooden wall, or a plant, for example. Further, a distance between the fuel cell system and the neighboring structure may be various. Furthermore, the neighboring structure may not be present. Therefore, an environment of the place where the fuel cell system is installed such as an elastic modulus of the installation place may affect the resonance frequency of the stepping motor 82.

Therefore, according to the fifth embodiment, in a state where the number of partitions of the basic step angle is defined to be "n", the microcomputer 108 functioning as the control portion incorporates a storage portion 200 storing a step angle partition number information where n is equal to or greater than two. Further, a selection operating portion 120 is connected to the microcomputer 108 so as to select the arbitrary number (the appropriate number) of partitions from the step angle partition number information stored at the storage portion 200 based on the place where the fuel cell system is installed (i.e., the installation place of the fuel cell system) and to change the number of steps per rotation of the stepping motor 82. A signal selected by the selection operating portion 120 is input to the microcomputer 108. In this case, a manufacturer, a seller, an installation person, a maintenance person, a user, and the like of the fuel cell system operate the selection operating portion 120 to thereby select the arbitrary number of partitions depending on the installation place of the fuel cell system and change the number of steps per rotation of the stepping motor 82. Thus, because the resonance frequency of the stepping motor 82 is changeable, the harmful vibration resulting from the resonance of the stepping motor 82 is restrained. The number 2, 4, 8, 12, 16, or the like is applicable to "n". The storage portion 200, which is mounted at the microcomputer 108, includes an area storing information related to the number of partitions of the basic step angle (i.e., the number of steps per rotation of the stepping motor 82) in which n is equal to or greater than two. The manufacturer, the seller, the installation person, the maintenance person, the user, and the like of the fuel cell system operate the selection operating portion 120 so that the arbitrary number of partitions is selected from the information related to the number of partitions of the basic step angle stored in the storage portion 200 of the microcomputer 108 based on the installation place of the fuel cell system.

Accordingly, even in a state where the control mode of the stepping motor 82 is specified to be in the 1/4 mode in the operation range of the stepping motor 82, the control mode Is changeable to a 1/2 mode or the 1/8 mode depending on the installation place of the fuel cell system. In addition, even in a state where the control mode of the stepping motor 82 is specified to be in the 1/16 mode in the operation range of the stepping motor 82, the control mode is changeable to the 1/8 mode or a 1/32 mode depending on the installation place of the fuel cell system.

Further, even when the fuel cell system that is once installed in one place is moved to another place, at least one of the manufacturer, the seller, the installation person, the maintenance person, the user, and the like of the fuel cell system operate the selection operating portion 120 to thereby select the arbitrary number of partitions of the basic step angle depending on the installation place of the fuel cell system and change the control mode. Therefore, depending on the installation place of the fuel cell system, the resonance frequency is avoidable from the operation range of the stepping motor 82.

The volume of the water transmitted to the evaporating portion 2 per time unit (one minute) may be small such as within a range from 0.1 cc to 20 cc. Because of such small volume, the harmful vibration caused by the resonance of the stepping motor 82 influences an accuracy of the pump 80 to transmit the water and the volume of the water transmitted per time unit. The volume of the water transmitted per time unit may fluctuate accordingly. In this case, the flow volume of the water vapor generated from the water per time unit used for reforming may fluctuate. Further, the flow volume of the anode gas per time unit may fluctuate, the anode gas serving as a hydrogen-containing gas reformed by the water vapor at the reforming portion 3 and generated at the reforming portion 3.

In the harmful vibration restraining process, the control portion 100 changes the number of partitions of the basic step angle of the stepping motor 82 based on the volume of the water in the tank 4 sent to the evaporating portion 2 per time unit, thereby restraining the harmful vibration of the stepping motor 82. The change of the number of partitions of the basic step angle results in the change of the number of steps per rotation of the stepping motor 82.

In addition, in the harmful vibration restraining process, the control portion 100 alternately selects and switches between a first area where the number of steps per rotation of the stepping motor 82 is small and a second area where the number of steps per rotation of the stepping motor 82 is large, in association with the increase of the volume of the water transmitted to the evaporating portion 2 per time unit. The resonance frequency of the stepping motor 82 is changed to thereby restrain the harmful vibration caused by the resonance of the stepping motor 82.

Further, in the harmful vibration restraining process, the control portion 100 alternately selects and switches between the first area where n is relatively small and the second area where n is relatively large, in association with the increase of the volume of the water transmitted to the evaporating portion 2 per time unit. The resonance frequency of the stepping motor 82 is changed to thereby restrain the harmful vibration caused by the resonance of the stepping motor 82. Depending on the number of phases or the number of gears of a rotor of the stepping motor 82, n is desirably equal to multiples of two. Alternatively, n is desirably equal to multiples of four such as 4, 8, 12, 16, 20, 24, 28, and 32. At this time, in a state where the step angle is indicated by θs (°) and the number of steps is indicated by S, an equation of θs=360/S is obtained. Thus, in association with a decrease of the step angle, the number of steps per rotation of the stepping motor 82 increases. In association with an increase of the number of partitions of the basic step angle, the number of steps per rotation of the stepping motor 82 increases.

Accordingly, a usage condition of the stepping motor 82 is specified so as to vary the resonance frequency (natural frequency) causing the harmful vibration of the stepping motor 82 so as to avoid the resonance frequency from the operation range of the stepping motor 82, and to restrain the harmful vibration caused by the resonance of the stepping motor 82. The influence to the pump 80 is restrained accordingly. The volume of the water transmitted per time unit basically corresponds to the flow volume of the water vapor per time unit generated at the evaporating portion 2 and to the power generation output of the fuel cell system. Thus, in a case where the volume of the water supply or transmission of the pump 80 is influenced, the power generation performance of the fuel cell system may fluctuate.

In the harmful vibration restraining process, in a state where the number of partitions of the basic step angle is defined to be "n", the control portion 100 sequentially selects and switches between the first area where n is relatively small (i.e., the number of steps per rotation of the stepping motor 82 relatively decreases) and the second area where n is relatively large (i.e., the number of steps per rotation of the stepping motor 82 relatively increases), in association with the increase of the volume of the water transmitted to the evaporating portion 2 per time unit. The number of steps per rotation of the stepping motor 82 is changed to thereby change the resonance frequency of the stepping motor 82 and the harmful vibration caused by the resonance of the stepping motor 82. In association with the increase of n, the number of steps per rotation of the stepping motor 82 increases. Accordingly, the usage condition of the stepping motor 82 is specified so that the resonance frequency of the stepping motor 82 causing the harmful vibration is deviated from the operation range of the stepping motor 82 so as to restrain the harmful vibration caused by the resonance of the stepping motor 82.

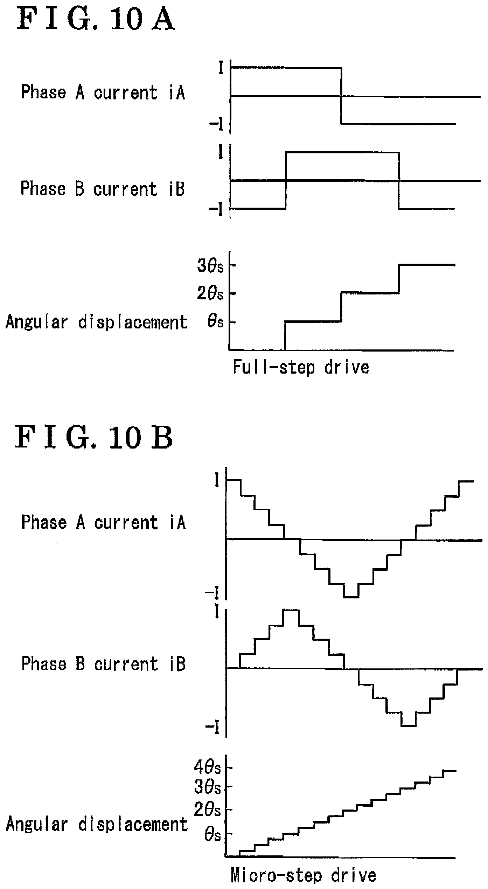

Figs. 10A and 10B illustrate examples where the stepping motor 82 is driven in a two-phase excitation mode. Fig. 10A illustrates a basic step drive where an angular displacement of one step is large. Fig. 10B illustrates a micro-step drive where the angular displacement of one step is small.

The fuel cell system includes the storage portion 200 storing the step angle partition number information where n is equal to or greater than two, and the selection operating portion 120 selecting the arbitrary number of partitions from the step angle partition number information stored at the storage portion 200 based on the place where the fuel cell system is mounted or installed. In this case, the manufacturer, the seller, the installation person, the maintenance person, the user, and the like of the fuel cell system operates the selection operating portion 120 to thereby select the arbitrary number of partitions depending on the installation place of the fuel cell system. At this time, because the resonance frequency (the natural frequency) of the stepping motor 82 is changeable, the harmful vibration caused by the resonance of the stepping motor 82 may be easily restrained. As mentioned above, depending on the number of phases or the number of gears of a rotor of the stepping motor 82, n is desirably equal to multiples of two. Alternatively, n is desirably equal to multiples of four such as 4, 8, 12, 16, 20, 24, 28, and 32. The storage portion 200 includes the area storing information related to the number of partitions of the basic step angle (i.e., the number of steps per rotation of the stepping motor 82) in which n is equal to or greater than two. The manufacturer, the seller, the installation person, the maintenance person, the user, and the like of the fuel cell system operates the selection operating portion 120 so that the arbitrary number of partitions is selected from the information related to the number of partitions of the basic step angle stored in the storage portion 200 based on the installation place of the fuel cell system. The influence caused by the installation place of the fuel cell system may be easily restrained.

### [Sixth embodiment]

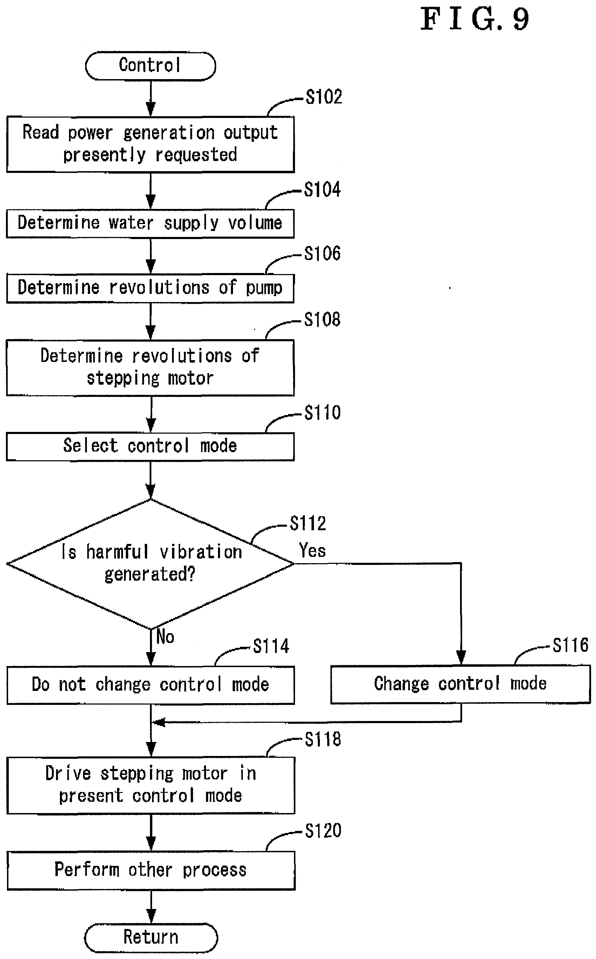

A sixth embodiment will be explained with reference to Fig. 9. The sixth embodiment basically includes the same configuration and effect as those of the first embodiment. A flow of an example of a control performed by a CPU in the microcomputer 108 in the power generating operation of the fuel cell system is illustrated in Fig. 9. In this case, however, the control performed by the CPU is not limited to the flow illustrated in Fig. 9. First, the CPU reads a power generation output presently requested on the fuel cell system by the user, and the like in S102. Based on the power generation output presently requested, a water supply volume per time unit relative to the evaporating portion 2 is determined in S104. Based on the water supply volume determined in S104, the revolutions (the number of rotations) of the pump 80 per time unit are determined in S106. Further, based on the revolutions of the pump 80 determined in S106, the revolutions of the stepping motor 82 per time unit are determined in S108. Based on the revolutions of the stepping motor 82 determined in S108, the control mode of the stepping motor 82 is selected in S110. In a case where the stepping motor 82 is driven in the control mode selected in S110, it is determined whether or not the stepping motor 82 generates the harmful vibration in S112. In a case where it is determined that the harmful vibration is generated (i.e., Yes in S112), the control mode is changed in 8116. Then, the stepping motor 82 is driven in the changed control mode (i.e., the changed number of steps). In a case where it is determined that the stepping motor 82 does not generate the harmful vibration (i.e., No in S112), the control mode of the stepping motor 82 is not changed (S114) and the stepping motor 82 is driven in the present control mode in S118. The other process is then performed in S120 and the CPU thereafter returns to the main routine.

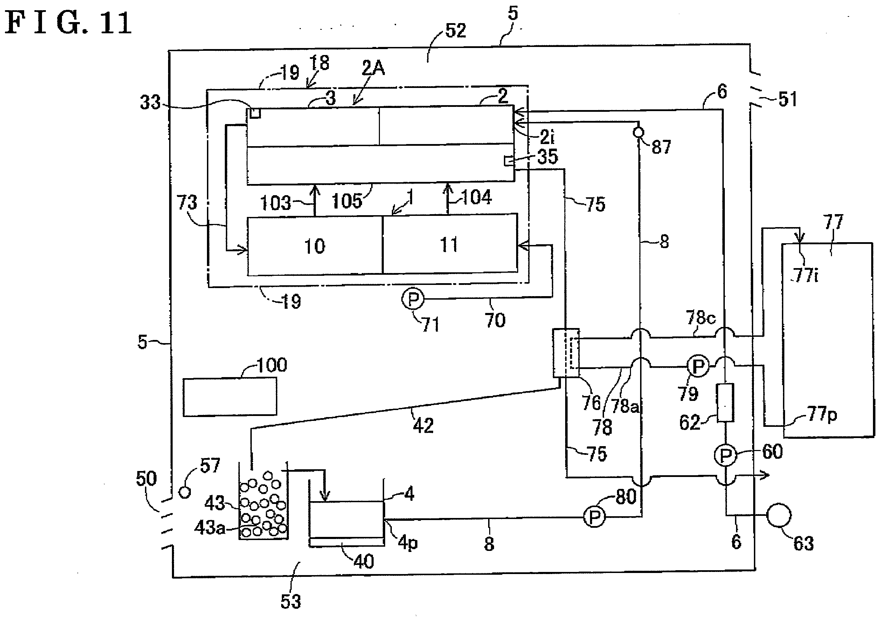

Applications of the fuel cell system according to the aforementioned embodiments will be explained with reference to Fig. 11. As illustrated in Fig. 11, the fuel cell system includes the fuel cell 1, the evaporating portion 2 evaporating water in a liquid phase so as to generate water vapor, the reforming portion 3 reforming fuel by using the water vapor generated at the evaporating portion 2 so as to form anode fluid, the tank 4 storing the water supplied to the evaporating portion 2, and a case 5 accommodating the fuel cell 1, the evaporating portion 2, the reforming portion 3, and the tank 4. The fuel cell 1 includes the anode 10 and the cathode 11 sandwiching therein an ionic conductor. For example, a solid oxide fuel cell (SOFC; an operation temperature is equal to or greater than 400 °C, for example) is applicable to the fuel cell 1. An anode exhaust gas discharged from the anode 10 is supplied to a combusting portion 105 via an anode exhaust gas passage 103. A cathode exhaust gas discharged from the cathode 11 is supplied to the combusting portion 105 via a cathode exhaust gas passage 104. The combusting portion 105 burns the anode exhaust gas and the cathode exhaust gas so as to heat up the evaporating portion 2 and the reforming portion 3. An exhaust combustion gas passage 75 is provided at the combusting portion 105 so that an exhaust combustion gas is emitted into air via the exhaust combustion gas passage 75. The exhaust combustion gas includes a gas after the combustion and unburnt gas at the combusting portion 105. The reforming portion 3 is formed by a carrier such as ceramics on which a reforming catalyst is carried. The reforming portion 3 is arranged next to the evaporating portion 2 so as to constitute a reformer 2A together with the evaporating portion 2. The reformer 2A and the fuel cell 1 are surrounded by an insulated wall 19 to thereby form a power generation module 18. A reference temperature sensor 33 detecting a temperature of the reforming portion 3 is provided at an inner side of the reforming portion 3. In addition, an ignition portion 35 serving as a heater for igniting the fuel is provided at an inner side of the combusting portion 105. The ignition portion 35 may have any structure as long as the ignition portion 35 ignites the fuel in the combusting portion 105. A signal from the reference temperature sensor 33 is input to the control portion 100. The control portion 100 controls the ignition portion 35 to operate so that the combusting portion 105 is ignited and heated up. In a power generating operation of the fuel cell system (the fuel cell 1), the reformer 2A is heated up within the insulated wall 19 so as to be suitable for a reforming reaction. In the power generating operation, the evaporating portion 2 is heated up so as to heat the water to obtain the water vapor. In a case where the fuel cell 1 is the SOFC, the anode exhaust gas discharged from the anode 10 and the cathode exhaust gas discharged from the cathode 11 are burnt at the combusting portion 105. As a result, the reforming portion 3 and the evaporating portion 2 are heated up at the same time. The fuel passage 6 through which the fuel from a fuel source 63 is supplied to the reformer 2A includes the fuel pump 60 and a desulfurizer 62. A cathode fluid passage 70 is connected to the cathode 11 of the fuel cell 1 so as to supply a cathode fluid (air) to the cathode 11. The cathode pump 71 is provided at the cathode fluid passage 70 so as to function as a supply source transmitting the cathode fluid.

As illustrated in Fig. 11, the case 5 includes an intake port 50 and an exhaust port 51 connected to an outside air. Further, the case 5 includes a temperature sensor 57 provided to face the intake port 50 so as to measure the outside air temperature, an upper void 52 provided at an upper side of the case 5 and serving as a first chamber, and a lower void 53 provided at a lower side of the case 5 and serving as a second chamber. The fuel cell 1, the reforming portion 3, and the evaporating portion 2 are accommodated in the upper void 52. The tank 4 storing the water that is reformed at the reforming portion 3 is accommodated in the lower void 53. A heating portion 40 such as an electric heater having a heating function is provided at the tank 4. The heating portion 40 formed by the electric heater, for example, heats up the water stored in the tank 4. In a case where an ambient temperature such as the outside air temperature is low, the water in the tank 4 is heated up to or above a predetermined temperature (for example, 5 °C, 10 °C, or 20 °C) by the heating portion 40 based on a command from the control portion 100 to thereby avoid freezing. The water level in the tank 4 may be desirably basically constant.

As illustrated in Fig. 11, the water supply passage 8 serving as a conduit is provided within the case 5 so as to connect an outlet port 4p of the tank 4 in the lower void 53 to an inlet port 2i of the evaporating portion 2 in the upper void 52. Because the tank 4 is arranged at a lower side of the evaporating portion 2 within the case 5, the water supply passage 8 is a passage through which the water stored in the tank 4 is supplied from the outlet port 4p of the tank 4 to the evaporating portion 2. The pump 80 functioning as the water supply source is provided at the water supply passage 8 so as to send the water in the tank 4 from the outlet port 4p to the evaporating portion 2. A known gear pump having a sealability, for example, is applicable to the pump 80. The pump 80 is driven by the electrical stepping motor 82. The water supply passage 8 is connected to the outside air via the evaporating portion 2, the reforming portion 3, and the fuel cell 1.

According to the aforementioned embodiments, the stepping motor 82 driving the pump 80 is rotatable in both forward and reverse directions. Specifically, the stepping motor 82 is switchable between a normal mode where the stepping motor 82 rotates in the forward direction so as to send the water in the tank 4 from the outlet port 4p to the inlet port 2i of the evaporating portion 2, and a reverse mode where the stepping motor 82 rotates in the reverse direction so as to return the water in the water supply passage 8 via the outlet port 4p to the tank 4. The control portion 100 is provided to control the stepping motor 82 via a drive circuit. The control portion 100 controls the pump 80 via the stepping motor 82. Further, the control portion 100 controls the cathode pump 71, a hot water storage pump 79 (to be explained later), and the fuel pump 60 via respective motors driving the pumps 71, 79, and 60.

In a case where the pump 80 is driven in the normal mode during the operation of the fuel cell system, the water in the tank 4 is sent from the outlet port 4p to the inlet port 2i of the evaporating portion 2 through the water supply passage 8. The water is then heated at the evaporating portion 2 to form the water vapor. In a case where the fuel is a methane fuel, the generation of the hydrogen containing gas (anode fluid) by the reforming using the water vapor is considered to occur on a basis of a formula (1) below. At this time, however, the fuel is not limited to the methane fuel.

(1) CH₄ + 2H₂O → 4H₂ + CO₂

CH₄ + H₂O → 3H₂ + CO

The water vapor moves to the reforming portion 3 together with the fuel supplied from the fuel passage 6. At this time, the gaseous fuel is desirable; however, the liquid fuel may be acceptable in some cases. The fuel in the reforming portion 3 is reformed by the water vapor so as to form the anode fluid (the hydrogen containing gas). The anode fluid is supplied to the anode 10 of the fuel cell 1 via an anode fluid passage 73. Further, the cathode fluid (an oxygen containing gas, i.e., air in the case 5) is supplied to the cathode 11 of the fuel cell 1 via the cathode fluid passage 70. As a result, the fuel cell 1 generates an electric power.

In the aforementioned power generation reaction, it is basically considered that a reaction of a formula (2) occurs at the anode 10 supplied with the hydrogen containing gas as the anode gas. In addition, it is basically considered that a reaction of a formula (3) occurs at the cathode 11 supplied with the air (oxygen) as the cathode gas. Oxygen ion (O²⁻) generated at the cathode 11 conducts electrolyte from the cathode 11 to the anode 10.

(2) H₂ + O²⁻ → H₂O + 2e⁻

In a case where CO is contained: CO + O²⁻ → CO₂ + 2e⁻

(3) 1/2O₂ + 2e⁻ → O²⁻

Anode off-gas after the power generation reaction includes hydrogen that has not been used in the power generation reaction. Cathode off-gas includes unreacted oxygen in the power generation reaction. The anode off-gas and the cathode off-gas are discharged to the combusting portion 105 and are burnt thereat. The anode off-gas and the cathode off-gas after being burnt are formed into the exhaust gas. The exhaust gas, which flows through the exhaust combustion gas passage 75 via a gas passage of a heat exchanger 76, is discharged to the outside of the case 5 via a discharge port formed at an end of the exhaust combustion gas passage 75. The heat exchanger 76 having a condensation function is provided at the exhaust combustion gas passage 75. A hot water storage passage 78 connected to a hot water storage tank 77 is connected to the heat exchanger 76. The hot water storage pump 79 is provided at the hot water storage passage 78. The hot water storage passage 78 includes an outward passage 78a and an inward passage 78c. A low temperature water in the hot water storage tank 77 is discharged from a discharge port 77p of the hot water storage tank 77 by the driving of the hot water storage pump 79 so as to flow through the outward passage 78a and is heated at the heat exchanger 76 by a heat exchange function thereof. The water heated by the heat exchanger 76 is returned to the hot water storage tank 77 from a return port 77i by flowing through the inward passage 78c. Accordingly, the hot water is obtained at the hot water storage tank 77. The water vapor included in the aforementioned exhaust gas from the fuel cell 1 is condensed at the heat exchanger 76 to form condensed water. The condensed water is supplied to a purification portion 43 due to the effect of gravity, for example, via a condensation water passage 42 extending from the heat exchanger 76. Because the purification portion 43 includes a water purifier 43a such as an ion-exchange resin, an impure substance contained in the condensed water is removed. The water where the impure substance is removed moves to the tank 4 and is stored thereat. When the pump 80 is driven in the normal mode, the water in the tank 4 is supplied to the evaporating portion 2 at the high temperature via the water supply passage 8 and is then supplied to the reforming portion 3 after the water turns to the water vapor at the evaporating portion 2. The water (water vapor) is consumed at the reforming portion 3 in the reforming reaction for reforming the fuel.

As illustrated In Fig. 11, a water sensor 87 is provided in the vicinity of the inlet port 2i of the evaporating portion 2 in the water supply passage 8. In the power generating operation of the fuel cell system, the stepping motor 82 is driven so as to discharge the water in the tank 4 to the water supply passage 8. The water surface is specified beforehand to a position where the water sensor 87 is provided. Then, the stepping motor 82 is driven to rotate so that the water positioned at the water sensor 87 is supplied to the evaporating portion 2 via the inlet port 2i. A distance from the water sensor 87 to the inlet port 2i is short. Thus, the water supply volume per time unit is small. A capacitive sensor, an electrical resistance sensor, or a pressure sensor detecting a water load is used as the water sensor 87, for example.

In a case where the harmful vibration of the stepping motor 82 occurs when the fuel cell system is operated, water supply characteristics of the pump 80 driven by the stepping motor 82 are influenced and therefore the water supply volume per time unit by the pump 80 is inhibited from being maintained highly accurately. When the water supply volume per time unit fluctuates relative to a target water supply volume, variations in the volume of the water vapor formed by the water relative to a target volume of the water vapor increases. Thus, it is difficult for the power generation performance of the fuel cell 1 to be stably obtained for a long time period. Further, the water surface detected by the water sensor 87 in the water supply passage 8 may vibrate or heave because of the aforementioned harmful vibration. In this case, a detection accuracy of the water sensor 87 detecting the water surface may be deteriorated.

According to the aforementioned embodiments, the control mode of the stepping motor 82 is changed so that the resonance frequency is deviated from the operation range of the stepping motor 82 where the stepping motor 82 actually rotates. Thus, the harmful vibration caused by the resonance of the stepping motor 82 is avoidable. As a result, the vibration of the water surface in the water supply passage 8 detected by the water sensor 87 is effectively restrained. The detection accuracy of the water sensor 87 is enhanced.

The first to sixth embodiments are not limited to have the aforementioned structures and applications and may be appropriately modified. The heating portion 40 is provided at the tank 4 according to the first to sixth embodiments. Alternatively, the heating portion 40 may be provided at the condensation water passage 42. The fuel cell 1 may be a polymer electrolyte fuel cell (PEFC), a phosphoric acid fuel cell (PAFC), or any other types of fuel cells such as a molten carbonate fuel cell. That is, the fuel cell at least includes the evaporating portion to form the water vapor from the water so as to reform the fuel in gas phase or liquid phase by the water vapor, the water supply source supplying the water to the evaporating portion, and the stepping motor driving the pump.

The fuel cell system includes the fuel cell 1 generating the electric power while being supplied with the anode fluid and the cathode fluid, the evaporating portion 2 evaporating the water so as to form the water vapor, the reforming portion 3 reforming the fuel by the water vapor generated at the evaporating portion 2 so as to form the anode fluid, the tank 4 storing the water supplied to the evaporating portion 2, the water supply passage 8 connecting the tank 4 and the evaporating portion 2 so as to supply the water in the tank 4 to the evaporating portion 2, the pump 80 provided at the water supply passage 8 so as to send the water in the tank 4 to the evaporating portion 2, the stepping motor 82 driving the pump 80, and the control portion 100 driving the pump 80. The control portion 100 includes the storage portion 200 storing the information of the number of partitions of the basic step angle where n is equal to or greater than two in a state where the number of partitions of the basic step angle is defined to be n, and the selection operating portion 120 selecting the arbitrary number of partitions from the information of the number of partitions of the basic step angle stored at the storage portion 200 depending on the installation place of the fuel cell system. In this case, depending on the installation place of the fuel cell system, the manufacturer, the seller, the installation person, the maintenance person, the user, and the like of the fuel cell system selects the arbitrary number of partitions by operating the selection operating portion 120.

According to the aforementioned first to sixth embodiments, the control portion 100 performs the harmful vibration restraining process for changing the number of partitions of the basic step angle of the stepping motor 82 on a basis of the volume of the water in the tank 4 transmitted to the evaporating portion 2 per time unit. The resonance frequency of the stepping motor 82 that is actually rotating is changeable. As a result, the resonance is avoidable from the operation range of the stepping motor 82 that is actually rotating. Further, the harmful vibration caused by the resonance of the stepping motor 82 is avoidable. Thus, even when the revolutions of the stepping motor 82 per time unit are changed, the resonance of the stepping motor 82 is avoidable because the volume of the water in the tank 4 transmitted to the evaporating portion 2 per time unit is changeable. The harmful vibration caused by the resonance is restrained accordingly.

In addition, according to the aforementioned embodiments, without a replacement with an expensive multi-phase stepping motor or a gear structure, the inexpensive stepping motor such as the stepping motor 82 achieves the change of the control mode, i.e., the number of steps, in the operation range of the stepping motor 82. Thus, the appropriate control mode, i.e., the appropriate number of steps is selected in the operation range of the stepping motor 82 on the basis of the revolutions of the stepping motor 82 at which the different resonance frequency is generated so as to avoid the resonance of the stepping motor 82. Thus, without the necessity to change a mechanical structure, the operation noise of the stepping motor 82 caused by the resonance is reduced simply by the change to the appropriate control mode, i.e., the number of steps,

A fuel cell system includes an evaporating portion (2), a reforming portion (3) forming an anode fluid, a fuel cell (1) generating an electric power, a tank (4), a water supply passage (8) connecting the tank and the evaporating portion and allowing water in the tank to be supplied to the evaporating portion, a water supply source (80) provided at the water supply passage to transmit the water in the tank to the evaporating portion, a stepping motor (82) driving the water supply source, and a control portion (100) driving the stepping motor to transmit the water in the tank to the evaporating portion. The control portion performs a harmful vibration restraining process to change a resonance frequency of the stepping motor by changing the number of steps per rotation of the stepping motor based on a volume of the water transmitted to the evaporating portion per time unit.

## Claims

1. A fuel cell system comprising:
an evaporating portion (2) evaporating water to generate a water vapor;
a reforming portion (3) forming an anode fluid by reforming a fuel by using the water vapor generated at the evaporating portion (2);
a fuel cell (1) generating an electric power by being supplied with the anode fluid and a cathode fluid;
a tank **(4)** storing the water supplied to the evaporating portion **(2);**
a water supply passage **(8)** connecting the tank **(4)** and the evaporating portion **(2)** and allowing the water in the tank **(4)** to be supplied to the evaporating portion **(2);**
a water supply source **(80)** provided at the water supply passage **(8)** to transmit the water in the tank **(4)** to the evaporating portion **(2);**
a stepping motor **(82)** driving the water supply source **(80);** and
a control portion **(100)** driving the stepping motor **(82)** to transmit the water in the tank **(4)** to the evaporating portion **(2),**
**characterized in that**
the fuel cell system includes a water sensor **(87)** that is provided in the water supply passage **(8)** at a position between the evaporating portion **(2)** and the water supply source **(80),** and detects a surface of the water in the water supply passage **(8);** and
the control portion (**100**) configured for performing a harmful vibration restraining process to change a resonance frequency of the stepping motor **(52)** by changing the number of steps per rotation of the stepping motor **(82)** based on a volume of the water transmitted to the evaporating portion **(2)** per time unit, in order to restrain deterioration of the detection accuracy of the water surface by the water sensor.

2. The fuel cell system according to claim 1, wherein the control portion **(100)** performs the harmful vibration restraining process to change the number of steps per rotation of the stepping motor **(82)** by changing the number of partitions of a basic step angle of the stepping motor **(82)** based on the volume of the water transmitted to the evaporating portion **(2)** per time unit.

3. The fuel cell system according to either claim 1 or 2, wherein the volume of the water transmitted to the evaporating portion **(2)** per time unit falls within a range from 0.1 cc to 20 cc.

4. The fuel cell system according to any one of claims 1 through 3, wherein in a state where the number of partitions of the basic step angle of the stepping motor **(82)** is defined to be n, the control portion **(100)** alternately selects a first range where n is relatively smaller and a second range where n is relatively greater in association with an increase of the volume of the water transmitted to the evaporating portion **(2)** per time unit.

5. The fuel cell system according to any one of claims 1 through 4, wherein in a state where the number of partitions of the basic step angle of the stepping motor **(82)** is defined to be n, the control portion **(100)** includes a storage portion **(200)** storing information of the number of partitions of the basic step angle in which n is equal to or greater than two and a selection operating portion **(120)** selecting the arbitrary number of partitions from the information of the number of partitions of the basic step angle stored in the storage portion **(200)** depending on a place where the fuel cell system is installed.

6. The fuel cell system according to any one of claims 1 through 5, wherein in a case where the number of rotations of the stepping motor **(82)** per time unit is greater than a predetermined threshold value **(C),** the control portion **(100)** drives the stepping motor **(82)** based on the number of steps of the stepping motor **(82)** different from the number of steps of the stepping motor **(82)** that occurs in a range where the number of rotations of the stepping motor **(82)** is greater than the predetermined threshold value **(C).**

7. The fuel cell system according to any one of claims 1 through 6, wherein in a case where the number of rotations of the stepping motor **(82)** per time unit is equal to or smaller than the predetermined threshold value **(C),** the control portion **(100)** drives the stepping motor **(82)** based on the number of steps of the stepping motor **(82)** different from the number of steps of the stepping motor **(82)** that occurs in a range where the number of rotations of the stepping motor **(82)** is equal to or smaller than the predetermined threshold value **(C).**

## Patentansprüche

1. Brennstoffzellensystem, mit:
einem Verdampfungsabschnitt **(2),** der Wasser verdampft, um Wasserdampf zu erzeugen;
einem Reformierungsabschnitt **(3),** der ein Anodenfluid durch Reformierung von Kraftstoff unter Verwendung des am Verdampfungsabschnitt **(2)** erzeugten Wasserdampfes bildet;
einer Brennstoffzelle **(1),** die elektrische Energie erzeugt, indem dieser das Anodenfluid und ein Kathodenfluid zugeführt wird;
einem Tank **(4),** der das dem Verdampfungsabschnitt **(2)** zugeführte Wasser speichert;
einer Wasserzufuhrpassage **(8),** die den Tank **(4)** und den Verdampfungsabschnitt **(2)** verbindet und dem Wasser im Tank **(4)** ermöglicht, dem Verdampfungsabschnitt **(2)** zugeführt zu werden;
einer Wasserzufuhrquelle **(80),** die an der Wasserzufuhrpassage **(8)** bereitgestellt ist, um das Wasser im Tank **(4)** zum Verdampfungsabschnitt **(2)** zu übertragen;
einem Schrittmotor **(82),** der die Wasserzufuhrquelle **(80)** ansteuert; und
einem Steuerabschnitt **(100),** der den Schrittmotor **(82)** ansteuert, um das Wasser im Tank **(4)** zu dem Verdampfungsabschnitt **(2)** zu übertragen,
**dadurch gekennzeichnet, dass**
das Brennstoffzellensystem einen Wassersensor **(87)** umfasst, der in der Wasserzufuhrpassage **(8)** an einer Position zwischen dem Verdampfungsabschnitt **(2)** und der Wasserzufuhrquelle **(80)** bereitgestellt ist, und der eine Oberfläche des Wassers in der Wasserzufuhrpassage **(8)** erfasst; und
der Steuerabschnitt **(100)** konfiguriert ist zum Durchführen eines Prozesses einer Begrenzung schädlicher Schwingungen zum Ändern einer Resonanzfrequenz des Schrittmotors **(52),** durch Ändern der Anzahl der Schritte pro Umdrehung des Schrittmotors **(82)** basierend auf einem Volumen an Wasser, das zu dem Verdampfungsabschnitt **(2)** pro Zeiteinheit übertragen wird, zu ändern, um eine Verschlechterung der Erfassungsgenauigkeit der Wasseroberfläche durch den Wassersensor zu begrenzen.

2. Brennstoffzellensystem gemäß Anspruch 1, wobei der Steuerabschnitt **(100)** den Prozess einer Begrenzung schädlicher Schwingungen zum Ändern der Anzahl der Schritte pro Umdrehung des Schrittmotors **(82)** durchführt, durch Ändern der Anzahl der Aufteilungen eines Basisschrittwinkels des Schrittmotors **(82)** basierend auf dem Volumen des zu dem Verdampfabschnitt **(2)** pro Zeiteinheit übertragenen Wassers.

3. Brennstoffzellensystem gemäß einem der Ansprüche 1 und 2, wobei das Volumen des zu dem Verdampfungsabschnitt **(2)** pro Zeiteinheit übertragenen Wassers in einen Bereich von 0,1 cm³ bis 20 cm³ fällt.

4. Brennstoffzellensystem gemäß einem der Ansprüche 1 bis 3, wobei in einem Zustand, in dem die Anzahl der Aufteilungen des Basisschrittwinkels des Schrittmotors **(82)** als n definiert ist, der Steuerabschnitt **(100)** abwechselnd einen ersten Bereich, in dem n relativ kleiner ist, und einen zweiten Bereich, in dem n relativ größer ist, in Verbindung mit einer Erhöhung des Volumens des Wassers, das zu dem Verdampfungsabschnitt **(2)** pro Zeiteinheit übertragen wird, auswählt.

5. Brennstoffzellensystem gemäß einem der Ansprüche 1 bis 4, wobei in einem Zustand, in dem die Anzahl der Aufteilungen des Basisschrittwinkels des Schrittmotors **(82)** als n definiert ist, der Steuerabschnitt **(100)** einen Speicherabschnitt **(200)** umfasst, der Information über die Anzahl der Aufteilungen des Basisschrittwinkels speichert, in dem n größer oder gleich zwei ist, und einen Auswahloperationsabschnitt **(120),** der die beliebige Anzahl von Aufteilungen aus den Informationen über die Anzahl der Aufteilungen des im Speicherabschnitt **(200)** gespeicherten Basisschrittwinkels gemäß einem Ort, an dem das Brennstoffzellensystem installiert ist, auswählt.

6. Brennstoffzellensystem gemäß einem der Ansprüche 1 bis 5, wobei in einem Fall, in dem die Anzahl von Umdrehungen des Schrittmotors **(82)** pro Zeiteinheit größer ist als ein vorbestimmter Schwellenwert **(C),** der Steuerabschnitt **(100)** den Schrittmotor **(82)** basierend auf der Anzahl von Schritten des Schrittmotors **(82)** ansteuert, die sich von der Anzahl von Schritten des Schrittmotors **(82)** unterscheidet und in einem Bereich auftritt, in dem die Anzahl von Umdrehungen des Schrittmotors **(82)** größer ist als der vorgegebene Schwellenwert **(C).**

7. Brennstoffzellensystem gemäß einem der Ansprüche 1 bis 6, wobei in einem Fall, in dem die Anzahl von Umdrehungen des Schrittmotors **(82)** pro Zeiteinheit kleiner oder gleich dem vorbestimmten Schwellenwert **(C)** ist, der Steuerabschnitt **(100)** den Schrittmotor **(82)** basierend auf der Anzahl von Schritten des Schrittmotors **(82)** ansteuert, die sich von der Anzahl von Schritten des Schrittmotors **(82)** unterscheidet und in einem Bereich auftritt, in dem die Anzahl der Umdrehungen des Schrittmotors **(82)** kleiner oder gleich dem vorbestimmten Schwellenwert **(C)** ist.

## Revendications

1. Système de pile à combustible qui comprend :
une partie d'évaporation (2) qui évapore l'eau pour générer une vapeur d'eau ;
une partie de reformage (3) qui forme un fluide d'anode en reformant un combustible en utilisant la vapeur d'eau générée au niveau de la partie d'évaporation (2) ;
une pile à combustible (1) qui génère une énergie électrique en recevant le fluide d'anode et un fluide de cathode ;
un réservoir (4) qui stocke l'eau fournie à la partie d'évaporation (2) ;
un passage de fourniture d'eau (8) qui relie le réservoir (4) et la partie d'évaporation (2) et qui permet la fourniture de l'eau dans le réservoir (4) à la partie d'évaporation (2) ;
une source de fourniture d'eau (80) prévue au niveau du passage de fourniture d'eau (8) pour transmettre l'eau dans le réservoir (4) à la partie d'évaporation (2) ;
un moteur pas à pas (82) qui commande la source de fourniture d'eau (80) ; et
une partie de commande (100) qui commande le moteur pas à pas (82) pour transmettre l'eau dans le réservoir (4) à la partie d'évaporation (2),
**caractérisé en ce que**
le système de pile à combustible comprend un capteur d'eau (87) qui est prévu dans le passage de fourniture d'eau (8) à une position entre la partie d'évaporation (2) et la source de fourniture d'eau (80), et qui détecte une surface de l'eau dans le passage de fourniture d'eau (8) ; et
la partie de commande (100) est configurée pour effectuer un processus de restriction de vibrations nuisibles pour changer une fréquence de résonance du moteur pas à pas (52) en changeant le nombre de pas par rotation du moteur pas à pas (82) sur la base d'un volume de l'eau transmise à la partie d'évaporation (2) par unité de temps, afin de restreindre la détérioration de la précision de détection de la surface de l'eau par le capteur d'eau.

2. Système de pile à combustible selon la revendication 1, dans lequel la partie de commande (100) effectue le processus de restriction de vibrations nuisibles pour changer le nombre de pas par rotation du moteur pas à pas (82) en changeant le nombre de divisions d'un angle de pas de base du moteur pas à pas (82) sur la base du volume de l'eau transmise à la partie d'évaporation (2) par unité de temps.

3. Système de pile à combustible selon l'une ou l'autre des revendications 1 et 2, dans lequel le volume de l'eau transmise à la partie d'évaporation (2) par unité de temps tombe dans une plage de 0,1 cm³ à 20 cm³.

4. Système de pile à combustible selon l'une quelconque des revendications 1 à 3, dans lequel, dans un état dans lequel le nombre de divisions de l'angle de pas de base du moteur pas à pas (82) est défini comme étant n, la partie de commande (100) sélectionne alternativement une première plage où n est relativement plus petit et une deuxième plage où n est relativement plus grand en association avec une augmentation du volume de l'eau transmise à la partie d'évaporation (2) par unité de temps.

5. Système de pile à combustible selon l'une quelconque des revendications 1 à 4, dans lequel, dans un état dans lequel le nombre de divisions de l'angle de pas de base du moteur pas à pas (82) est défini comme étant n, la partie de commande (100) comprend une partie de mémorisation (200) qui mémorise les informations du nombre de divisions de l'angle de pas de base dans lequel n est supérieur ou égal à deux et une partie d'exécution de sélection (120) qui sélectionne le nombre arbitraire de divisions à partir des informations du nombre de divisions de l'angle de pas de base mémorisées dans la partie de mémorisation (200) en fonction d'un emplacement où le système de pile à combustible est installé.

6. Système de pile à combustible selon l'une quelconque des revendications 1 à 5, dans lequel, dans un cas dans lequel le nombre de rotations du moteur pas à pas (82) par unité de temps est supérieur à une valeur de seuil prédéterminée (C), la partie de commande (100) commande le moteur pas à pas (82) sur la base du nombre de pas du moteur pas à pas (82) différent du nombre de pas du moteur pas à pas (82) qui apparaît dans une plage où le nombre de rotations du moteur pas à pas (82) est supérieur à la valeur de seuil prédéterminée (C).

7. Système de pile à combustible selon l'une quelconque des revendications 1 à 6, dans lequel, dans un cas dans lequel le nombre de rotations du moteur pas à pas (82) par unité de temps est inférieur ou égal à la valeur de seuil prédéterminée (C), la partie de commande (100) commande le moteur pas à pas (82) sur la base du nombre de pas du moteur pas à pas (82) différent du nombre de pas du moteur pas à pas (82) qui apparaît dans une plage où le nombre de rotations du moteur pas à pas (82) est inférieur ou égal à la valeur de seuil prédéterminée (C).
